(19) Europäisches Patentamt
European Patent Office
Office européen des brevets

(11) Publication number: 0 102 316 A2

# (12) EUROPEAN PATENT APPLICATION

(21) Application number: 83730063.1

(22) Date of filing: 30.06.83

(51) Int. Cl.³: B 29 H 17/02
B 29 H 17/12, B 29 H 17/22

(30) Priority: 30.06.82 JP 113430/82

(43) Date of publication of application: 07.03.84 Bulletin 84/10

(84) Designated Contracting States: DE FR GB IT NL

(71) Applicant: MITSUBISHI JUKOGYO KABUSHIKI KAISHA
5-1, Marunouchi 2-chome Chiyoda-ku
Tokyo(JP)

(72) Inventor: Irie, Nobuhiko NAGASAKI SHIPYARD & ENGINE WORKS
Mitsubishi Jukogyo K.K. 1-1, Akunoura-machi
Nagasaki City Nagasaki Pref.(JP)

(74) Representative: Meissner, Peter E., Dipl.-Ing. et al,
Herbertstrasse 22
D-1000 Berlin 33(DE)

## (54) Method of molding tires.

(57) An improved method of molding tires is disclosed, wherein the improvement consists in that tire molding is carried out by way of the steps of detecting movement of a stitcher tool during the tire molding under manual handling with the aid of a position detecting device, detecting at least either of the number of revolutions and the direction of rotation of a molding drum with the aid of a rotation detecting device, storing the results of detecting in a storage device and thereafter automatically controlling movement of the stitcher tool as well as at least either of the number of revolutions and the direction of rotation of the molding drum by processing signals issued from the storage device.

Further, another improved method of molding tires is disclosed according to other aspect of the invention, wherein the improvement consists in that tire molding is carried out by way of the steps of detecting movement of a stitcher tool during tire molding under manual handling for a series of processes comprising turn-down, bead-stitch, turn-up and ply-lock with the aid of a position detecting device, detecting at least either of the number of revolutions and the direction of rotation of a molding drum with the aid of a rotation detecting device, detecting movement of a pull-out device under manual handling with the aid of a position detecting device prior to carrying out turn-up processes after completion of bead-stitch process, storing the results of detecting in a storage device and thereafter automatically controlling movement of the stitcher tool, at least either of the number of revolutions and the direction of rotation of the molding drum and movement of the pull-out device by processing signals issued from the storage device.

FIG. 1

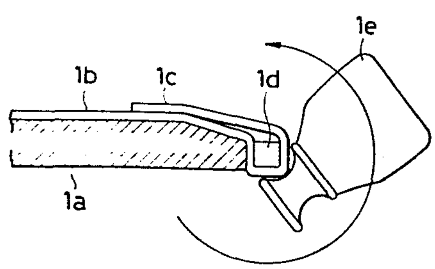


EP 0 102 316 A2

COMPLETE DOCUMENT

Croydon Printing Company Ltd

The present invention relates to an improved method of molding tires.

As is well known, a tire is generally manufactured by way of the steps of winding raw material therefor round a cylindrical molding drum, carrying out molding to obtain a molded product (which is usually called green tire) and then press forming said molded product in a die while subjecting it to vulcanization at an elevated temperature until a finished tire is produced.

One of the most important factors determining a quality of thus manufactured tire is a molding process for green tire and therefore most of tire manufacturers are making their utmost effort in order to improve the molding process.

Now, beads constituting the most essential component for assuring strength and quality of the tire structure will be described in more details with respect to a process for wrapping beads with carcass plys comprising the processes of ply-down, bead-stitch, pull-out and turn-up.

Referring first to Figs. 1 and 2, a cylindrical molding drum 1a or 2a is fitted with a carcass ply 1b or 2b by winding the latter round said molding drum 1a or 2a or preforming it in a cylindrical configuration and then thrusting the preformed one over the molding drum 1a or 2a. Next, the overhung portion 1c or 2c of the carcass ply 1b or 2b is folded along the configuration of the molding drum

la or 2a. A bead ld or 2d is then thrusted onto the overhung portion lc or 2c of the carcass ply lb or 2b and thereafter the overhung portion lc or 2c is wound up until it overlapps the carcass ply lb or 2b so that the bead ld or 2d is wrapped thereby. Thus, a process of wrapping a bead is completed.

The above-mentioned process is conducted in a mechanical manner with the aid of a stitcher tool having a variety of configurations and it will be described below with respect to the conventional method.

In case when a tire including one bead as for a passenger car is molded on a drum la that is generally called flat drum, this process can be accomplished in a substantially automatic manner merely by turning a stichter tool le about the core center of the bead ld as illustrated in Fig. l. On the other hand, when a tire for truck, bus , vehicle for construction works or the like is molded, a drum 2a that is generally called high crown drum is employed for molding operation and a plurality of beads are wrapped. In the last mentioned case it is impossible to mechanically conduct a process for wrapping beads in an automatic manner unless movements of the stitcher tool 2e including movement in the radial direction, movement in the traverse direction (in the direction of drum axis) and rotary movement as illustrated in Figs. 2(a) and 2(b) are

properly controlled and the number of revolutions and the direction of rotation of the drum are changed in dependence on movements of the stitcher.

Next, an example of systems in which the above-mentioned three movement can be conducted simultaneously will be described below with reference to Fig. 3.

In the drawing reference numeral 3 designates a stitcher tool carried by an arm 4. As a pneumatic spring 5 attached to the lower part of the arm 4 is caused to expand, thrusting force to be exerted on the drum is transmitted to the stitcher tool 3. Further, the arm 4 is turnably mounted on a bracket 6 adapted to rotate about a worm wheel 8 which meshes with a worm 9 in a carriage 7, said worm 9 being driven by means of a motor 10 via an endless chain 11 and a driving shaft 12. The carriage 7 is movably mounted on a platform 13 so that it moves in parallel to the axis of drum as a feed screw 14 is rotated. It should be noted that the feed screw 14 is divided into two sections at the middle thereof so as to have two halves extending in the opposite direction to one another and it is driven by means of a motor 15 via an endless chain 16.

On the other hand, the platform 13 is movably mounted on the base which is fixedly mounted on the floor (not shown) so that it moves in the radial direction as a feed screw 17 is rotated. The feed screw 17 is driven by means

of a motor 18 via an endless chain 19 and a gear box 20. It should be noted that shaft end coders 21, 22 and 23 are disposed at the one end of the driving shaft 12 and the feed screws 14 and 17 so that the position and the direction of rotation of the stitcher tool 3 are detected. The above-mentioned three movements are controlled in accordance with the following conventional methods.

(1) Relay sequence control

Fig. 4 schematically illustrates this control method by way of a block diagram. To simplify illustration the stitcher tool is shown on the drawing only with respect to movement in the traverse direction. Controlling of a pull-out device is also shown on the drawing and it will be described in more details later. Reference numeral 30 designates a relay sequence, reference numeral 40a does a control device for a motor 50a which serves for driving a stitcher tool 60a in the traverse direction, reference numeral 70a does a detecting device for detecting the traverse position of the stitcher tool 60a, reference numeral 40b does a control device for a motor 50b which serves for driving a drum 60b, reference numeral 70b does a detecting device for detecting rotation of the drum 60b, reference numerals 40c and 40d do a control device for hydraulic cylinders 50c and 50d respectively which serve for driving pull-out devices 60c and 60d, reference numeral

50e does a hydraulic unit, reference numerals 70c and 70d do a detecting device for detecting the position of the pull-out devices 60c and 60d respectively and reference numerals 80a, 80b, 80c and 80d do a process completion signal respectively. Next, the procedures of carrying out controlling will be described in the following.

(I) Required positions are scribed on a section paper and points are determined in consideration of movements of the stitcher tool so that amount of controlling such as number of rotations of the drum or the like at each of said points is determined. Fig. 5 shows a concrete example of the above-mentioned procedures.

(II) Operations of the stitcher tool and the drum planned in the above-described manner are inputted into the relay sequence.

(III) Operations are practically performed in accordance with the relay sequence in the above-described mamner. If it is found that operations fail to be performed correctly, value of controlling for each of the points is changed (by changing the setting of a limit switch for detecting positions or the like) or addition, subtraction or the like of points are carried out so that the relay is rearranged.

However, the above method takes long time until one sequence is prepared by way of the repeated steps of

desk planning, application to practical operations and rearrangement and moreover requires a large amount of expenditure for manufacturing tires on the trial base. Accordingly, the relay sequence of the conventional method can be repeatedly employed when a considerably large lot number of tires are manufactured for truck, bus or the like vehicle, but in case of manufacturing on the base of small number and many kinds, for instance, for vehicles for construction works it is not practicable because there is necessity for rearrangment to be made at every time when the kind of tire to be manufactured is shifted to another one and therefore it is employed at substantially reduced operational efficiency. Further, since it is constructed of a plurality of relays, there is limitation in number of steps and moreover it is difficult to carry out fine controls including the number of revolutions and the direction of rotation of drum. In addition to this it is difficult to rearrange the relay sequence for a very short period of time in construction site and desk planning requires highly trained skill.

(2) Control by manual handling

Fig. 6 schematically illustrates a method of controlling the stitcher tool and the drum by manual handling by way of a block diagram (it should be noted that controlling of the pull-out device is scribed on the drawing but it will be

described in more details later). In this method an operator specifies one of three movements comprising movement in the traverse direction, movement in the radial direction and rotary movement while he watches existing movement of the stitcher tool and there is no necessity for feeding back signals with respect to the position of the stitcher tool but feedback is required for controlling rotation of the drum. In the last mentioned case controlling is carried out by manual handling commands 90a, 90b, 90c and 90d instead of the relay sequence 80 as illustrated in Fig. 4.

However, it has been pointed out as drawbacks with respect to this conventional method that highly trained skill is required for practicing the method and there is few reproductivity.

Further, as illustrated by a dotted line in Fig. 6, this method may be modified in such a manner as to feed back signals with respect to the position of the stitcher tool, but since a command is given by an operator, there is still necessity for highly trained skill and few reproductivity is assured. Moreover, fluctuation in quality of finished tires takes place unavoidably due to difference in skill of operators.

In case when tires for vehicle for construction works are molded, ply-down process is performed with the aid of a so-called pull-out device prior to turn-up process

to be performed by means of the stitcher tool, a bead is fixedly attached and thereafter the overhung portion of the ply which has been subjected to ply-down process is drawn in the axial direction of drum.

Next, operation of the conventional pull-out device will be described below.

Fig. 7 schematically illustrates an example of a large size of tire molding machine which is utilized for manufacturing tires for a vehicle for construction works or the like. In the drawing reference numeral 101 designates a molding drum constituting an essential component for molding tires. The molding drum 101 is mounted on a main shaft 102 by means of a tail stock which serves to support a tail stock shaft 105 adapted to be connected to the main shaft 102. The tail stock shaft 105 includes a conventional means which does not inhibit rotation of the main shaft 102 caused by a driving mechanism (not shown) while the main shaft 102 is in operative connection to the tail stock shaft 105.

Reference numeral 106 designates a stitching device which serves to thrust raw material for tire fitted onto the molding drum 101 and reference numeral 107 does a pull-out ring which is mounted on a sleeve 8 slidably fitted onto the main shaft 102. The sleeve 108 is adapted to slide on the main shaft 102 in the axial direction by

operating a hydraulic cylinder 109 mounted on the head stock 103.

Reference numeral 110 designates a so-called bead ring which is a conventional component fitted to mold tires. The bead ring 110 is mounted on a plurality of pawls 113 on a block 112 adapted to slide in the axial direction with the aid of a hydraulic cylinder 111 mounted on the head stock 103. The bead ring 110 on the pawls 118 is located in the proximity of raw material on the molding drum 101 at a certain time during tire molding.

It should be noted that the pull-out ring 107 is divided into several pieces of sections along the periphery thereof and includes a plurality of segments 121 disposed between the adjacent divided sections, said segments 121 moving outward or inward in the radial direction.

A sleeve 114, a pull-out ring 115, a block 116 and pawls 117 constructed in the substantially same manner as the sleeve 108, the pull-out ring 107, the block 112 and pawls 118 are mounted on the tail stock shaft 105.

When a tire is molded, a rubber layer 118 including fibrous material therein (to serve as raw material for tire) that is called cylindrical band is fitted onto the molding drum 101 in such a manner as illustrated in the left half of Fig. 8, it is then thrusted against the molding drum 101 along the configuration of both tne end parts thereof

by means of a stitcher tool 119 of the stitch device 106 (as illustrated at the upper part of the right half of the drawing) and thereafter a bead ring 110 held by means of the pawls 113 and 117 is thrusted against the rubber layer 118 (as illustrated at the lower part of the right half of the drawing).

Next, the pull-out rings 107 and 115 fixedly secured to the outermost end part of the sleeves 108 and 114 are caused to move outward (toward the opposite side of the molding drum 101) together with the sleeves 108 and 114 by operating hydraulic cylinders whereby the segments 121 of both the pull-out rings 107 and 115 are projected outward in the radial direction until both the side end edge parts of the rubber band 118 are deformed as illustrated at the left half of Fig. 9.

Next, the sleeves 108 and 114 are displaced inward (toward the inside of the molding drum 101) by a predetermined distance so that both the side end edge parts of the rubber band 118 are thrusted by means of each of the segments 121 of the pull-out rings 107 and 115 in such a manner as to encase the bead ring 110 (see the right half of Fig. 9).

Finally, part of the rubber band 118 located around the bead ring 110 as well as part which has not thrusted by means of the segments 121 are thrusted tightly with the

aid of the stitcher tool 119 of the stitch device 106. As a result an intended tire molding is completed.

When the relay sequence control as illustrated in Fig. 4 is employed for the purpose of controlling the position of the pull-out device, it is found that similar problem is caused as the relay sequence control system in the aforesaid stitcher device. For the reason a method of operating in accordance with the manual control (as illustrated in Fig. 6) is employed inevitably.

However, in case of the manual operation the following problem occurs. Namely, while the the pull-out rings 107 and 115 are displaced outward of the molding drum 101, an operator fails to observe the positional relation between the segments 121 and the bead 110 because they are covered with the overhung part of the ply and moreover it is difficult to determine the proper position of the hydraulic cylinder 109 because the latter is actuated in an ON-OFF system. If the segments 121 are caused to expand at the position located inward of the properly determined one, it results that they grasp the inside part of the bead 110 and thereby part of the ply which has been thrusted against the curved configuration of the molding drum 101 is peeled off therefrom as it is drawn out. Further, it is found as another problem that when the segments 121 are caused to expand at the position located outward of the properly

determined one, air pockets are developed on the folded part of the ply and thereby the bead 110 fails to be wrapped correctly.

Accordingly, it is required that an operator pays attention so as to cause the segments 121 to expand after it is confirmed that the pull-out rings 107 and 115 are drawn out to the properly determined position. Further, there is necessity for dislocating the properly determined position outward step by step, corresponding to the increased number of beads to be wrapped and therefore he is required to pay attention at many times as the beads are increasingly wrapped. In the conventional molding operation two operators are usually arranged by both the sides of the molding drum to watch molding operation and they are required to have highly trained skill and be very causious.

Thus, the present invention has been made with the foregoing problems in mind and its object resides in providing an improved method of molding tires free from the drawbacks inherent to the conventional methods which assures that a high quality of tire is manufactured at an excellently high operational efficiency.

Specifically, the present invention consists in that tire molding is carried out by way of the steps of detecting movement of a stitcher tool during the tire molding under manual handling with the aid of a position

detecting device, detecting at least either of the number of revolutions and the direction of rotataion of a molding drum with the aid of a rotation detecting device, storing the results of detecting in a storage device and thereafter automatically controlling movement of the stitcher tool as well as at least either of the number of revolutions and the direction of rotation of the molding drum by processing signals issued from said storage device.

When the method of the invention is employed, the stitcher tool and the molding drum are controlled under manual handling by way of which movement of the stitcher tool as well as the number of revolutions and the direction of rotation of the molding drum can be controlled as required, movement of the stitcher tool during tire molding under manual handling is detected by means of a position detecting device while the number of revolutions and the direction of rotation of the molding drum are detected by means of a rotation detecting device, the results of detecting are stored in a storage device and thereafter movement of the stitcher tool and rotation of the molding drum are automatically controlled by processing signals issued from the storage device. Thus, it becomes possible that tire molding is repeatedly carried out under the optimum conditions derived from manual handling of an operator having highly trained skill and therefore a

number of tire are manufactured at an excellently high operational efficiency with reproductivity of molding operation assured but without any necessity for rearranging a sequence.

Further, the present invention consists in that tire molding is carried out by way of the steps of detecting movement of a stitcher tool during the tire molding under manual handling for processes comprising turn-down, bead-stitch, turn-up and ply-lock with the aid of a position detecting device, detecting at least either of the number of revolutions and the direction of rotation of a molding drum with the aid of a rotation detecting device, detecting movement of a pull-out device under manual handling with the aid of a position detecting device prior to the turn-up process after completion of the bead-stitch process, storing the results of detecting in a storage device and thereafter automatically controlling movement of the stitcher tool, at least either of the number of revolutions and the direction of rotation of the molding drum and movement of the pull-out device by processing signals issued from said storage device.

When the method of the invention is employed, the stitcher tool, the molding drum and the pull-out devices disposed at both the sides of the molding drum are controlled under manual handling by way of which movement

of the stitcher tool, rotation of the molding drum and operation of the pull-out devices can be controlled as required, movement of the pull-out devices during tire molding under manual handling is detected by means of a position detecting device, the results of detecting are stored in a storage device and thereafter movement of the pull-out devices are automatically controlled by processing signals issued from the storage device. Thus, it becomes possible that a number of tires are manufactured at a higher operational efficiency.

The accompanying drawings will be briefly described below.

Fig. 1 is a partial sectional view of a flat molding drum schematically illustrating a turn-up process thereon, shown in an enlarged scale.

Figs. 2(a) and 2(b) are a partial sectional view of a high crown molding drum respectively, schematically illustrating a ply-down process and a turn-up process thereon, shown in an enlarged scale.

Figs. 3(a), 3(b) and 3(c) schematically illustrate an example of a device for carrying out a ply-down process and a turn-up process respectively, wherein Fig. 3(a) is a front view of the device, Fig. 3(b) is a plan view of the device with a stitcher tool and associated devices removed therefrom for the purpose of simplification of

illustration, and Fig. 3(c) is a side view of the device with a feed screw and associated devices removed therefrom for the purpose of simplification of illustration.

Fig. 4 is a block diagram schematically illustrating an example of the conventional control method.

Fig. 5 is an analysis diagram illustrating movements of a stitcher tool.

Fig. 6 is a block diagram schematically illustrating another example of the conventional control method.

Fig. 7 is a schematic sectional view of the conventional tire molding machine for molding large size tires for vehicle for construction works.

Fig. 8 is a schemtic sectional view of a part of the tire molding machine in Fig. 7 illustrating operations of the latter, shown in an enlarged scale.

Fig. 9 is a schematic sectional view of a part of the tire molding machine in Fig. 7 illustrating another operations of the latter, shown in an enlarged scale.

Fig. 10 is a block diagram schematically illustrating a tire molding method in accordance with an embodiment of the invention, and

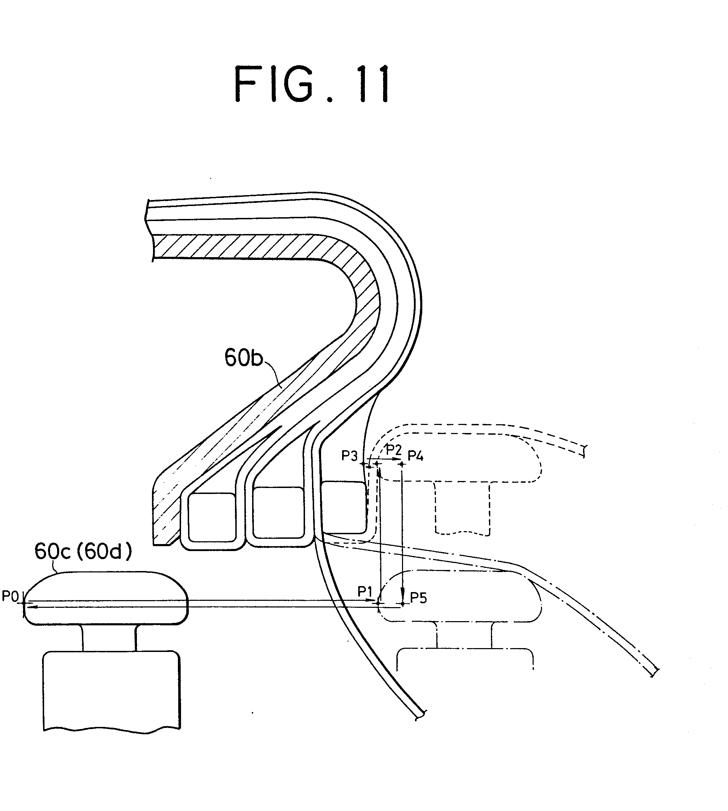

Fig. 11 is a partial sectional view of a molding tire schematically illustrating operations of a pull-out ring, shown in an enlarged scale.

Now, the present invention will be described in a

greater detail hereunder with reference to Figs. 10 and 11 which schematically illustrate a preferred embodiment of the invention.

In Fig. 10 which is a block diagram schematically illustrating an embodiment of the invention a position control system for a stitcher tool is typically shown only with respect to a traverse position control system for the purpose of simplification of illustration. It should be noted that the same or substantially same components as those in the traverse position control system are provided also with respect to both radial and rotary position control systems. Same or similar parts and components as those in Figs. 4 and 6 are identified with the same reference numerals.

Tire molding is carried out in conformance with commands issued under manual handling prepared by manual handling command devices 90a and 90b while operations of a stitcher tool 60a and a molding drum 60b are controlled. During tire molding operation of the stitcher tool 60a is detected by means of a position detecting device 70a and the number of revolutions and the direction of rotation of the molding drum 60b are detected by means of a rotation detecting device 70b so that the results of detecting are stored in a storage device 100 by feeding back them thereto.

Then, control operation is shifted to automatic control

operation by actuating a shift switch. Thus, the stitcher tool and the molding drum can be automatically controlled in accordance with signals issued from the storage device 100 after a start button is depressed so that the same operations as those in the beginning are carried out for them. Further, tire molding is also carried out in conformance with commands issued under manual handling prepared by manual handling command devices 90c and 90d while operations of a righthand pull-out device 90c and a lefthand pull-out device 60d are controlled individually thereby. During tire molding operations of both the pull-out devices are detected by means of position detecting devices 70c and 70d respectively and the results of detecting are stored in the storage device 100 by feeding back them to the latter.

Then, control operation is shifted to automatic control operation by actuating a shift switch. Thus, both the pull-out devices can be automatically controlled in accordance with signals issued from the storage device 100 after a start button is depressed so that the same operations as those in the beginning are carried out for them. It should be noted that both the pull-out devices may be controlled by stored signals only for the righthand or lefthand pull-out device in order to reduce storing capacity in the storage device.

Next, operations for tire molding will be described in more details below with reference to Figs. 5 and 11.

To simplify description a series of forming processes comprising thrusting of a bead against a ply which has been subjected to ply-down operation, pulling-out of the ply with the aid of a pull-out device, thrusting of the same against to molding drum and then conducting of both turn-up and ply-lock with the aid of a stitcher tool will be described merely with respect to the third bead.

It will be readily understood from the following description as to how both ply-down and bead-stitch forming process are carried out for the ply band fitted onto the molding drum with the aid of a bead stitcher tool and further forming processes are carried out for the first and second bead portions.

It is assumed that points P1 to P5 in Fig. 11 serve as a reference point for controlling the position for pull-out process and an initial point PO serves as an original point for a position control device.

When thrusting of the third bead is completed, a green tire on the molding drum 60b assumes the position as identified with real lines in Fig. 11.

The manual handling command device 90c or 90d is initiated to operate so that the pull-out ring 60c (or 60d) is displaced to the point P1 located outward of the molding

drum and the point P1 is then stored in the storage device 100. Next, segments constituting the pull-out ring 60c (or 60d) are caused to expand and time t1 which has elapsed after issuance of a command for expanding them is stored in the storage device 100. Next, the pull-out ring 60c (or 60d) is displaced toward the molding drum until the point P2 is reached while the segments of the pull-out ring 60c (or 60d) are kept in the expanded state and the point P2 is then stored in the storage device 100. After a predetermined time t2 elapses, the pull-out ring 60c (or 60d) is displaced outward of the molding drum until the point P3 is reached. The time t2 which has elapsed until displacement to the point P4 is initiated after storing of the position P3 is stored in the storage device 100 and thereafter the point P4 is also stored therein. Next, the segments constituting the pull-out ring 60c (or 60d) are caused to contract until the position P5 is reached and thereafter the time t3 which has elapsed until contraction is completed after initiation of the same is stored in the storage device 100. The point P0 is then resumed and it is stored in the storage device 100.

Next, description will be made below as to a device 90a as illustrated in Fig. 10 with reference to Fig. 5, said device 90a being provided with a shift switch which can issue a command for initiating three movements

comprising movement in the traverse direction, movement in the radial direction and rotary movement.

It should be noted that interlocking is established so as to inhibit both the movements in the traverse and radial directions from being initiated during the rotary movement in the illustrated embodiment of the invention.

First, actuations of the shift switch (manual - storing - automatic) are stored in the storage device. At this moment the stitcher tool is located at the point O (as defined by lines TO and RO) and moreover it assumes the angular position as defined by line AO (during rotary movement).

Next, the shift switch is actuated so that the stitcher tool enters movement in the radial direction. When the stitcher tool reaches the point 1 (as defined by lines TO and R4), a command is issued so as to intiate rotary movement. A value of detection achieved by the position detecting device when a command is to be altered (from movement in the radial direction to rotary movement in this case) is stored in the storage device. When it is confirmed that the stitcher tool assumes the required direction of posture, the shift switch is actuated (so as to store the position as defined by lines TO, R4 and A3) so that the position 2' (as defined by lines T2 and R4) is reached. Then, the shift switch is actuated in the same manner as

in the foregoing while an operator is watching movement of the stitcher tool, whereby the latter is displaced in accordance with the predermined order of position 3' → position 4' → position 5 → ( angular position A3 → angular position A2) → position 6 → ( angular position A2 → angular position A1) → position 7 → position 8 → ( angular position A1 → angular position A0) → position 0. Thus, a turn-up process is completed for the third bead. It should be of cource understood that during the turn-up process the molding drum rotates and alterations intentionally made with respect to the number of revolutions and the direction of rotation of the molding drum are stored in the storage device, corresponding to movement of the stitcher tool.

When it is found that there takes place any malfunction such as occurance of wrinkles on the carcass ply, for instance, at the position 4" located midway of displacement from the point 4' to the point 5, the stitcher tool is caused to stop its movement by actuating the shift switch so as to conduct remedial activity for straightening wrinkles and thereafter the position 4" is stored in the storage device. In view of an occurance of malfunction as mentioned above a returnable push button is preferably provided and an electric circuit is designed so that storing of the position 4" is cancelled with said push button depressed and the stitcher tool resumes the previous

position (position 4' in this case). Thus, movements required for tire molding are successively stored from beginning to end so that all storings with respect to required control positions are completed when a tire is molded finally.

Next, a main shift switch is shifted to the automatic position and an automatic start button is then depressed whereby movement of the stitcher tool is automatically controlled in conformance with the data stored in the storage device and a series of processes comprising ply-down, turn-up and others are automatically carried out. It should be of cource understood that necessary interlocking should be prepared so as to assure that the stitcher tool is inhibited from further movement when it reaches the point O unless the automatic start button is depressed again.

As will be apparent from the above description, the method of the invention is constructed such that movement of the stitcher tool under manual handling as well as the number of revolutions and the direction of rotation of the molding drum are detected and stored and moreover movement of the pull-out devices is detected and stored in the storage device. Thus, the method of the invention has excellently high reproductivity of operation and there is no necessity for rearranging a sequence whereby a number of tires having high quality can be manufactured at an

excellently high efficiency.

While the present invention has been described above with respect to a preferred embodiment, it should be of cource understood that the invention should not be limited only to this but many changes or modifications may be made in a suitable manner without ant departure from the spirit and scope of the invention.

WAHT IS CLAIMED IS:

(1) A method of molding tires, characterized in that tire molding is carried out by way of the steps of detecting movement of a stitcher tool during the tire molding under manual handling with the aid of a position detecting device, detecting at least either of the number of revolutions and the direction of rotation of a molding drum with the aid of a rotation detecting device, storing the results of detecting in a storage device and thereafter automatically controlling movement of the stitcher tool as well as at least either of the number of revolutions and the direction of rotation of the molding drum by processing signals issued from said storage device.

(2) A method of molding tires, characterized in that tire molding is carried out by way of the steps of detecting movement of a stitcher tool during the tire molding under manual handling for a plurality of processes comprising turn-down, bead-stitch, turn-up and ply-lock with the aid of a position detecting device, detecting at least either of the number of revolutions and the direction of rotation of a molding drum with the aid of a rotation detecting device, detecting movement of a pull-out device under manual handling with the aid of a position detecting device prior to carrying out turn-up process after completion of bead-stitch process, storing the results of detecting in

a storage device and thereafter automatically controlling movement of the stitcher tool, at least either of the number of revolutions and the direction of rotation of the molding drum and movement of the pull-out device by processing signals issued from said storage device.

FIG. 1

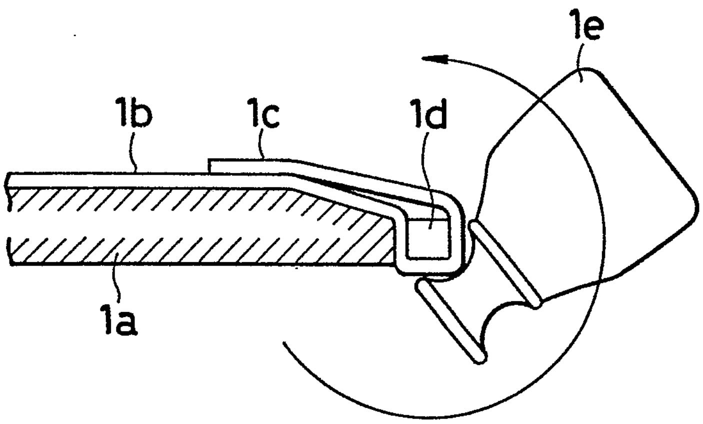


FIG. 2

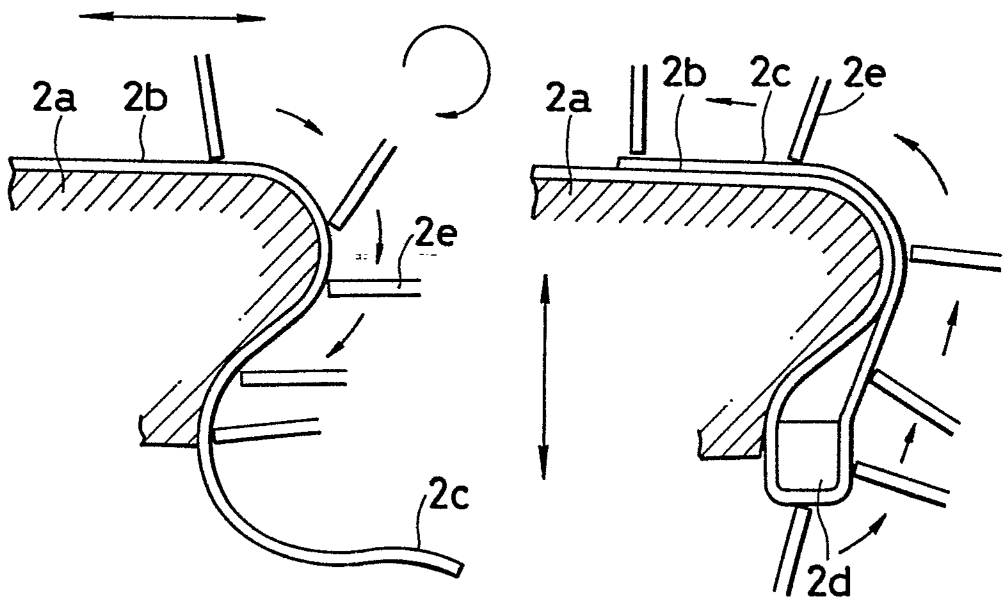


(a) (b)

# FIG. 3

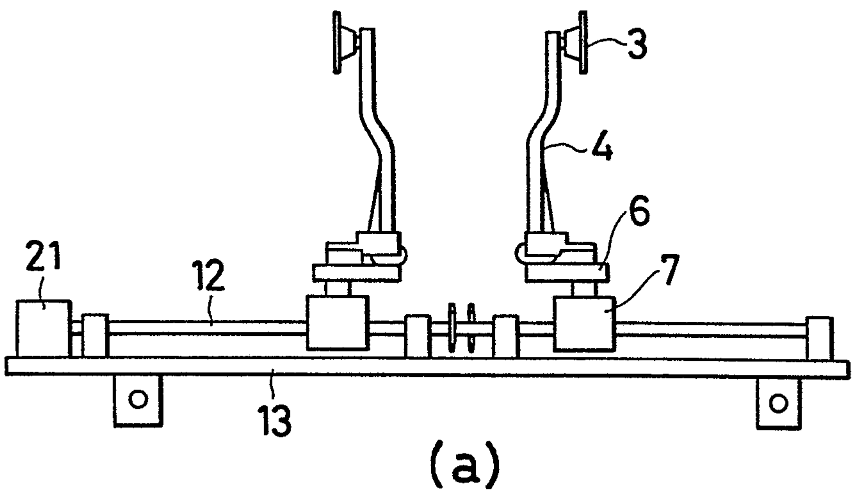


(a)

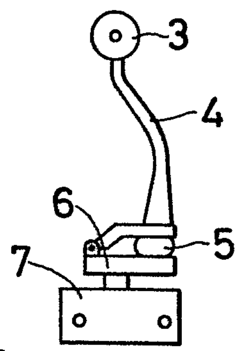


(c)

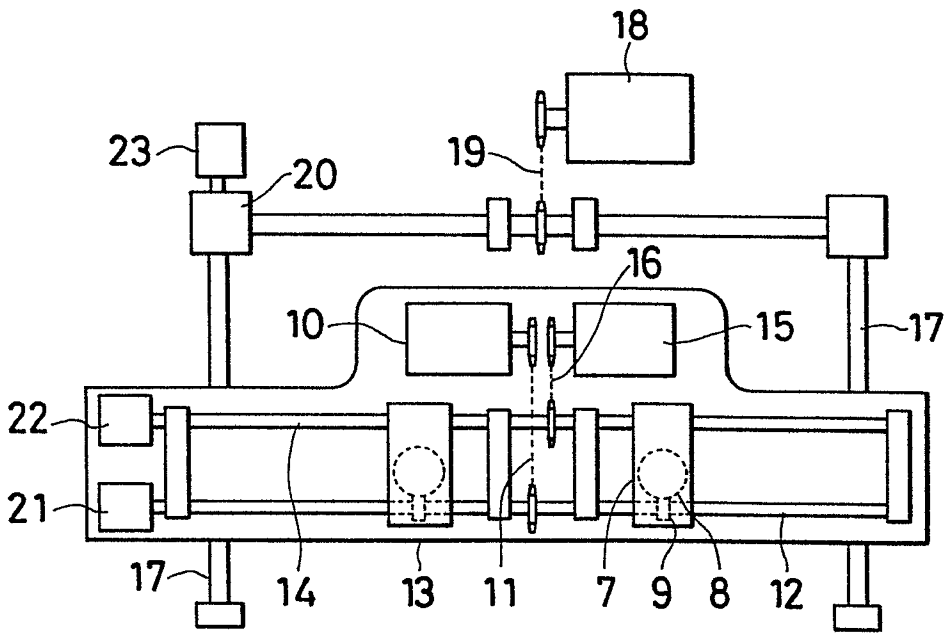


(b)

FIG. 4

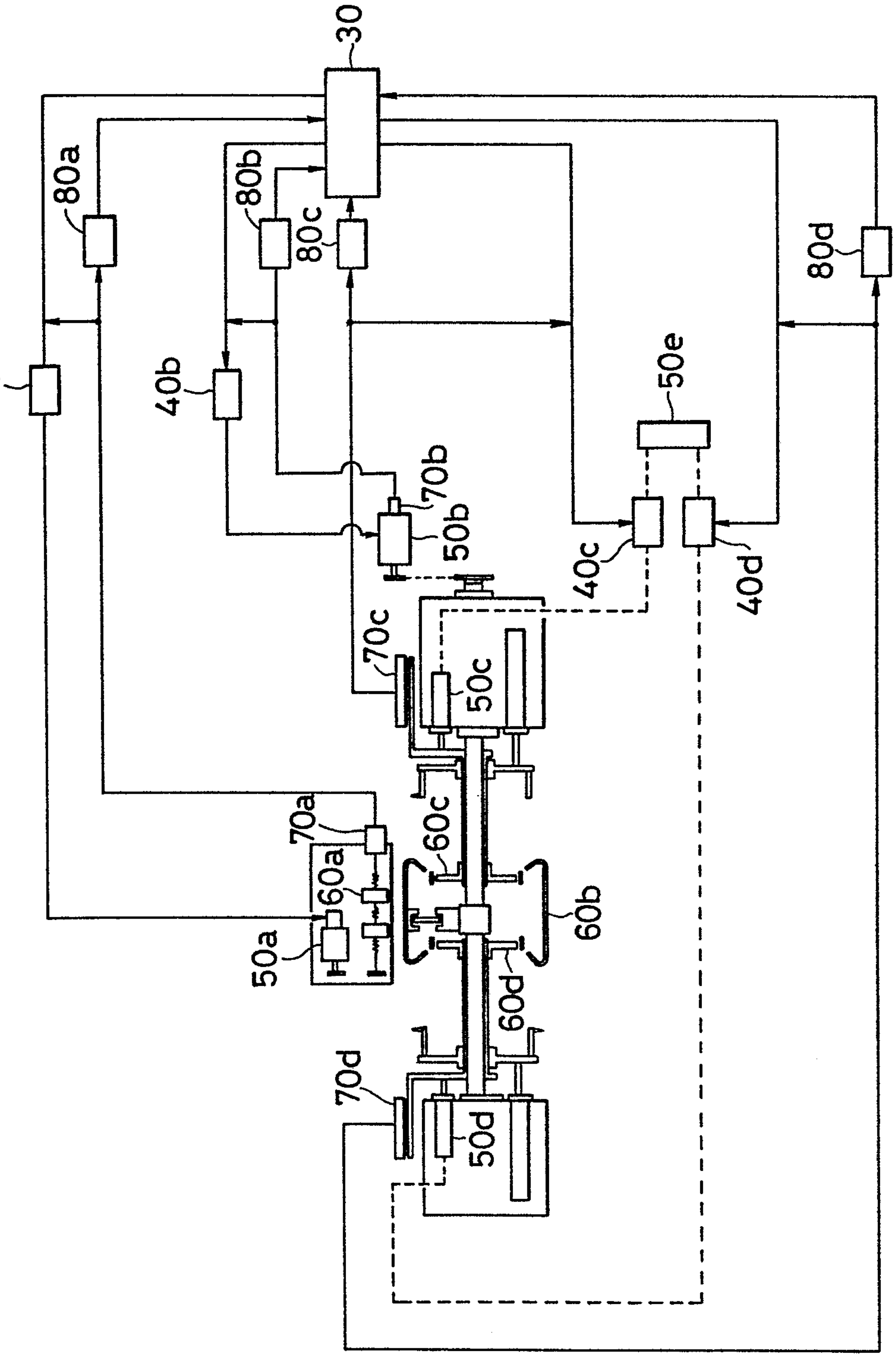
30
80a
80b
80c
80d
40a
40b
40c
40d
50a
50b
50c
50d
50e
60a
60b
60c
60d
70a
70b
70c
70d

FIG. 5

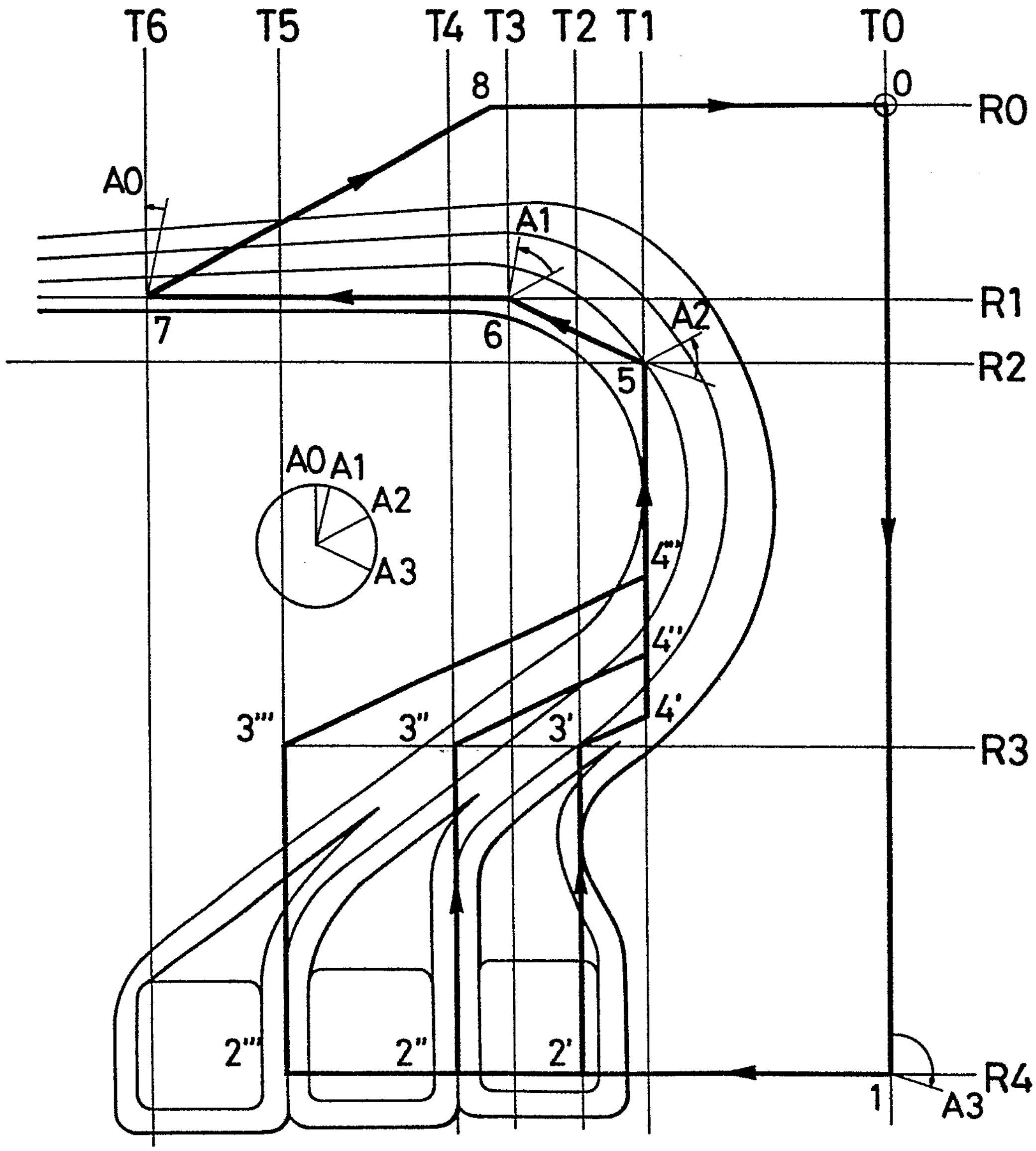
T6
T5
T4
T3
T2
T1
T0
8
0
R0
A0
A1
R1
A2
7
6
R2
5
A0
A1
A2
A3
4'''
4''
4'
3'''
3''
3'
R3
2'''
2''
2'
1
A3
R4

FIG. 6

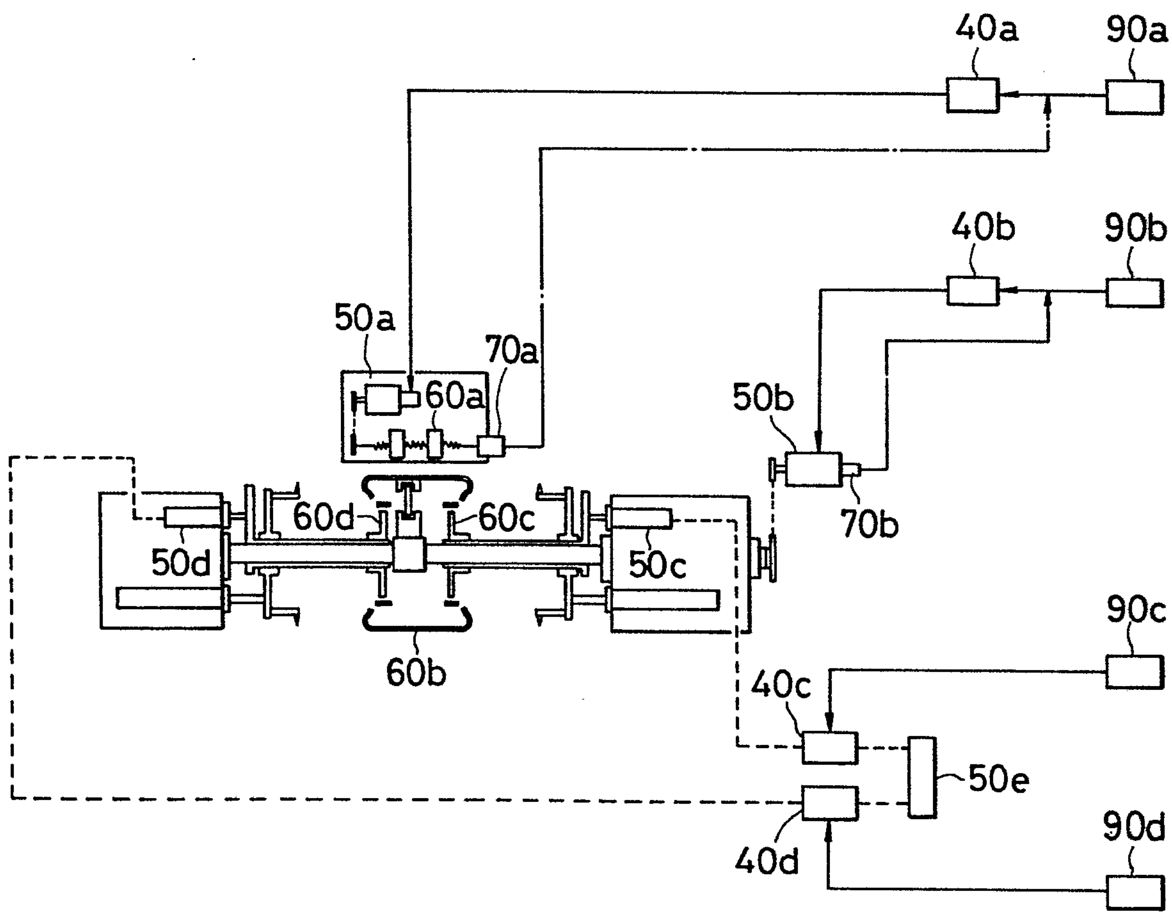
40a
90a
40b
90b
50a
70a
60a
50b
70b
60d
60c
50d
50c
60b
90c
40c
50e
40d
90d

FIG. 7

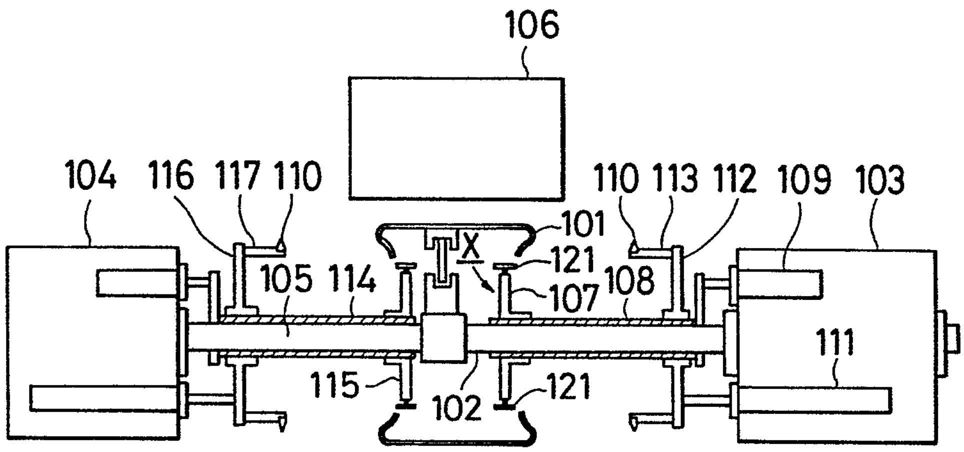


FIG. 8

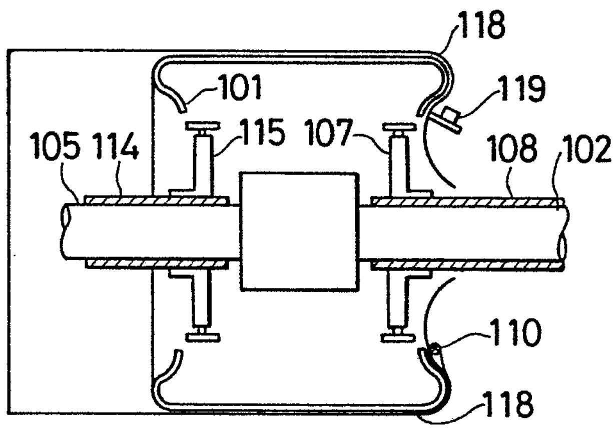


FIG. 9

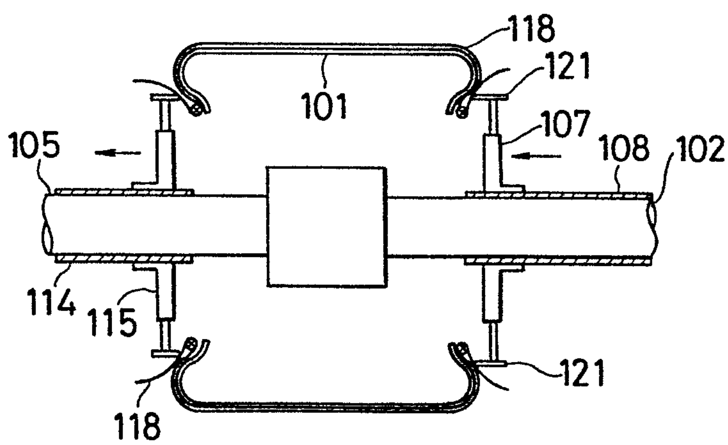

FIG. 10

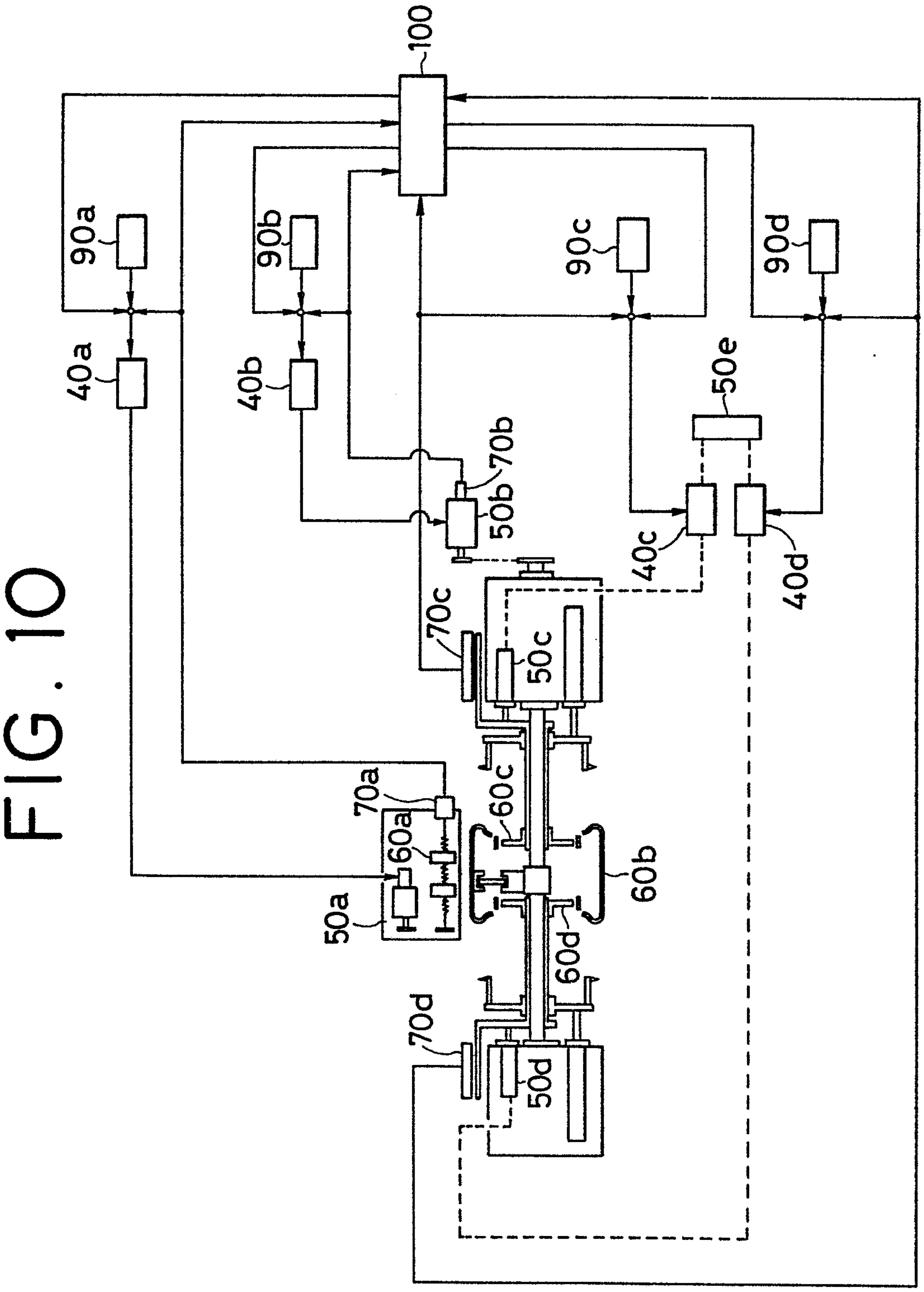
100
90a
90b
90c
90d
40a
40b
40c
40d
50a
50b
50c
50d
50e
60a
60b
60c
60d
70a
70b
70c
70d

FIG. 11